# FASCICULE DE BREVET EUROPEEN

(11) **EP 2 760 737 B1**
(45) Date de publication et mention de la délivrance du brevet: **19.04.2017**
(21) Numéro de dépôt: 12775789.6
(22) Date de dépôt: 28.09.2012
(51) Int. Cl.: B64C 11/18, B64C 27/467, F01D 5/14

(54) **PALE POUR UNE HELICE DE TURBOMACHINE, NOTAMMENT A SOUFFLANTE NON CARENEE, HELICE ET TURBOMACHINE CORRESPONDANTES**
PROPELLERBLATT FÜR MANTELLOSE GEBLÄSETRIEBWERKE, PROPELLER MIT EINEM DERARTIGEN PROPELLERBLATT SOWIE GEBLÄSETRIEBWERK
PROPELLER BLADE FOR UNDUCTED FAN ENGINE, PROPELLER COMPRISING SUCH A BLADE AND CORRESPONDING ENGINE

(30) Priorité: 29.09.2011 FR 1158770
(43) Date de publication de la demande: 06.08.2014
(73) Titulaire: Safran Aircraft Engines, 75015 Paris (FR); Onera, 92322 Chatillon Cedex (FR)
(72) Inventeur: VION, Laurence, 77550 Moissy-Cramayel Cedex (FR); DELATTRE, Grégory, 92140 Clamart (FR); JACQUIN, Laurent, 78150 Le Chesnay (FR); RODRIGUEZ, Benoit, 78000 Versailles (FR); BOISARD, Ronan, 91370 Verrières de Buisson (FR); ORTUN, Biel, 75014 Paris (FR); FALISSARD, Fabrice, 92330 Sceaux (FR)
(74) Mandataire: Gevers & Orès
(86) Numéro de dépôt international: PCT/FR2012/052202
(87) Numéro de publication internationale: WO 2013/045859

(56) Documents cités:
- EP-A2- 0 867 363
- EP-A2- 2 368 795
- DE-A1- 19 812 624

## Description

La présente invention concerne une pale pour une hélice de turbomachine, notamment à soufflante non carénée, une hélice et une turbomachine correspondantes.

L'état de la technique comprend DE-A1-198 12 624 et EP-A2-2 368 795.

De façon connue, une turbomachine à soufflante non carénée peut comprendre deux hélices externes coaxiales et contrarotatives, respectivement amont (avant) et aval (arrière), qui sont chacune entraînées en rotation par une turbine et qui s'étendent, sensiblement radialement, à l'extérieur de la nacelle de la turbomachine. Chaque hélice comprend usuellement un moyeu concentrique à l'axe longitudinal de la turbomachine, sur lequel sont fixées des pales.

Cependant, l'interaction aérodynamique entre les hélices contrarotatives amont et aval d'une telle turbomachine à soufflante non carénée engendre des niveaux acoustiques de fonctionnement élevés. En effet, la rotation des pales des hélices contrarotatives amont et aval provoque la formation :
- de sillages le long de l'envergure des pales, en aval de celles-ci ;
- de tourbillons marginaux à l'extrémité libre des pales ; et
- de turbulences à la base des pales.
Ces perturbations aérodynamiques en aval de l'hélice amont sont à l'origine de bruit aérodynamique d'interaction lorsqu'elles heurtent l'hélice aval ou passent à proximité de celle-ci.

En particulier, lors des phases de fonctionnement à basse vitesse d'une turbomachine à soufflante non carénée (telles que, lorsqu'elle est montée sur un aéronef, le roulage, le décollage, l'atterrissage et l'approche), la contribution dominante du bruit rayonné provient des raies d'interaction associées à l'hélice aval qui fonctionne dans le flux de l'hélice amont, en traversant les nappes tourbillonnaires constituées de sillages et tourbillons marginaux formés par les pales de l'hélice amont (également désignées pales amont). Lorsqu'un tourbillon marginal de pales amont interagit avec les pales de l'hélice aval (autrement appelées pales aval), l'interaction pale aval - tourbillon marginal domine le spectre acoustique rayonné pour la plupart des directivités.

Aussi, pour réduire les émissions sonores indésirables de telles turbomachines et ainsi satisfaire aux critères de certifications acoustiques imposés par les autorités aériennes, il est nécessaire de réduire le bruit rayonné à basse vitesse en réduisant l'interaction pale aval - tourbillon marginal.

Actuellement, la solution connue la plus répandue - dénommée écrêtage (ou « clipping » en anglais) - consiste à réduire le diamètre de l'hélice aval, de manière à faire passer les tourbillons marginaux engendrés par les pales amont à l'extérieur des pales aval pour limiter l'interaction de ces dernières avec les tourbillons marginaux. Cela implique généralement une augmentation de la corde des pales aval pour maintenir la traction désirée et le rapport de couple entre les hélices amont et aval. Une telle solution peut être poussée à l'extrême en chargeant très fortement l'extrémité des pales amont, de manière à décharger le reste de chacune des pales amont pour réduire l'impact du sillage de l'hélice amont sur l'hélice aval, également à l'origine de bruit d'interaction indésirable.

Cependant, une telle solution ne s'avère acceptable que pour une configuration isolée de la turbomachine (c'est-à-dire sans élément extérieur relié à celle-ci) et sans incidence. En présence d'éléments (mât, fuselage) ou d'incidence, la contraction et l'axisymétrie de l'écoulement d'air derrière l'hélice amont sont modifiées, de sorte que l'écrêtage réalisé ne prévient plus l'interaction des pales aval et des tourbillons marginaux engendrés par les pales amont. Une réduction importante de la hauteur des pales aval (correspondant à un écrêtage important) implique une augmentation de la corde associée aux pales aval de façon à conserver la charge, ce qui dégrade le rendement de la turbomachine associée et n'est donc pas satisfaisant.

La présente invention a pour objet de remédier à cet inconvénient et, notamment, de réduire sensiblement le bruit rayonné par une turbomachine à soufflante non carénée à double hélices contrarotatives en affaiblissant l'interaction pale aval - tourbillon marginal.

A cette fin, selon l'invention, la pale pour une hélice de turbomachine, notamment à soufflante non carénée, est remarquable par le fait qu'elle comporte des moyens agencés à un unique emplacement pour perturber localement, lors de la rotation de l'hélice, la répartition de la circulation autour de la pale, de manière à former deux tourbillons principaux indépendants en aval, les moyens perturbateurs comportant une unique excroissance formée sur le bord d'attaque de la pale est caractérisée par le fait que l'unique excroissance est définie par sa position en envergure h de telle façon que 0,75H<h<0,85H, H étant la hauteur de la pale.

Ainsi, grâce à l'invention, on modifie la répartition de la circulation autour de la pale de façon à provoquer deux tourbillons principaux :
- un premier tourbillon naturel (ou tourbillon marginal) se formant à l'extrémité libre de la pale;
- un second tourbillon forcé distinct (ou tourbillon principal supplémentaire) ayant lieu au voisinage des moyens de perturbation.
Les tourbillons marginal et supplémentaire sont co-rotatifs (c'est-à-dire qu'ils présentent un même sens de rotation) et restent indépendants l'un de l'autre jusqu'à hélice aval. Grâce à l'invention, on réalise une modification de la distribution de la circulation autour d'une position locale unique et on aboutit à la formation de deux tourbillons - de plus faible intensité que l'unique tourbillon marginal actuellement observé - qui ne fusionnent pas ensemble. En outre, les performances d'une hélice amont comprenant des pales conformes à l'invention ne sont pas modifiées par rapport à une hélice amont équipée de pales dépourvues des moyens de perturbation de l'invention.

Selon la présente invention, les moyens perturbateurs comportent une unique excroissance formée sur le bord d'attaque de la pale, ce qui permet la création des tourbillons marginal et supplémentaire co-rotatif accompagnée de la formation de tourbillons auxiliaires contra-rotatifs (c'est-à-dire qu'ils présentent un sens de rotation inverse de celui des deux tourbillons co-rotatifs) intercalés entre les deux tourbillons co-rotatifs, ce qui prévient leur fusion et les maintient indépendants l'un de l'autre jusqu'aux pales de l'hélice aval. Il est à noter que l'ajout d'une excroissance supplémentaire conduit à la fusion rapide des deux tourbillons marginal et supplémentaire, ce qui n'est pas souhaitable.

De façon avantageuse, l'unique excroissance est définie par :
- sa position en envergure h de telle façon que 0,75H<h<0,85H, H étant la hauteur de la pale,
- et éventuellement par ;
- sa hauteur en envergure d de telle façon que 0,05H<d<0,2H ;
- sa largeur en corde 1 de telle façon que c/16<1<c/8, c étant la longueur de la corde locale de la pale à la position en envergure h de ladite excroissance.

Dans une variante conforme à l'invention, la pale peut comprendre une encoche qui est ménagée dans le bord d'attaque de ladite pale et qui jouxte ladite excroissance.

Par ailleurs, la présente invention concerne également une hélice, notamment pour turbomachine à soufflante non carénée, qui comporte une pluralité de pales du type de celle décrite ci-dessus.

De plus, la présente invention concerne encore une turbomachine comportant au moins une hélice du type de celle mentionnée précédemment.

En particulier, lorsque la turbomachine est à soufflante non carénée et comporte deux hélices coaxiales et contrarotatives, au moins l'hélice amont est avantageusement du type de celle détaillée plus haut.

Les figures du dessin annexé feront bien comprendre comment l'invention peut être réalisée. Sur ces figures, des références identiques désignent des éléments semblables.
La figure 1 est une vue schématique en coupe longitudinale d'une turbomachine à soufflante non carénée équipée de pales amont selon une réalisation conforme à l'invention.
La figure 2 est une vue schématique agrandie en élévation d'une pale amont de la figure 1.
Les figures 3 à 5, semblables à la figure 2, représentent trois variantes de réalisation de la pale amont de la figure 2, conformes à la présente invention.

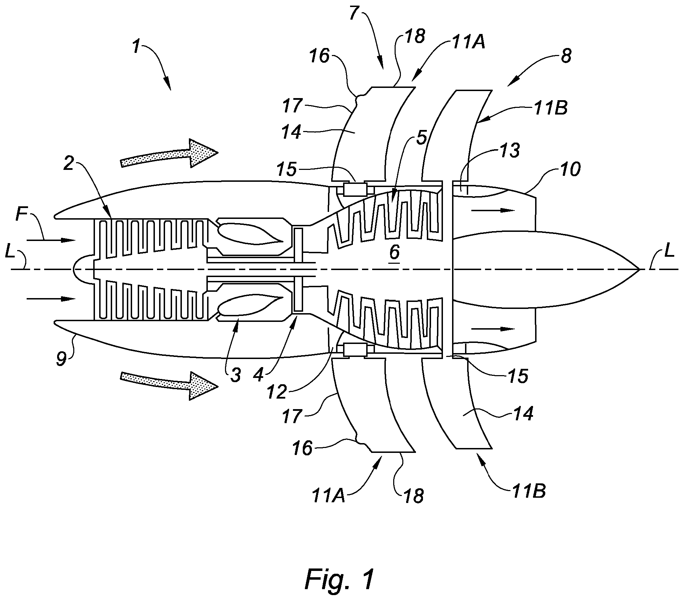

Sur la figure 1, on a représenté, de façon schématique, une turbomachine 1 à soufflante non carénée, conforme à l'invention, qui comporte d'amont en aval, dans le sens d'écoulement des gaz (symbolisés par la flèche F) à l'intérieur de la turbomachine d'axe longitudinal L-L, un compresseur 2, une chambre annulaire de combustion 3, une turbine haute pression 4 et deux turbines basse pression 5 et 6 qui sont contrarotatives, c'est-à-dire qu'elles tournent dans deux sens opposés autour de l'axe longitudinal L-L.

Chacune des turbines basse pression 5 et 6 est solidaire en rotation d'une hélice externe 7, 8 s'étendant radialement à l'extérieur de la nacelle 9 de la turbomachine 1, la nacelle 9 étant sensiblement cylindrique et s'étendant le long de l'axe L-L autour du compresseur 2, de la chambre de combustion 3 et des turbines 4, 5 et 6. Les gaz de combustion sortant des turbines sont expulsés à travers une tuyère 10 pour augmenter la poussée.

Les hélices 7 et 8 sont disposées coaxialement l'une derrière l'autre et comportent une pluralité de pales 11A et 11B équi-angulairement réparties autour de l'axe longitudinal L-L. Les pales 11A et 11B s'étendent sensiblement radialement et sont du type à calage variable, c'est-à-dire qu'elles peuvent tourner autour de leur axe longitudinal de manière à optimiser leur position angulaire en fonction des conditions de fonctionnement souhaitées de la turbomachine 1. Bien entendu, en variante, les pales des hélices pourraient également être à calage fixe.

Chaque hélice amont 7 ou aval 8 comprend un moyeu rotatif 12, 13 supportant les pales 11A, 11B et disposé de façon concentrique à l'axe longitudinal L-L de la turbomachine 1, perpendiculairement à celui-ci.

Les pales amont 11A et aval 11B sont chacune formées d'un corps de pale 14 et d'un pied de pale 15, monté de façon rotative sur le moyeu 12, 13 correspondant.

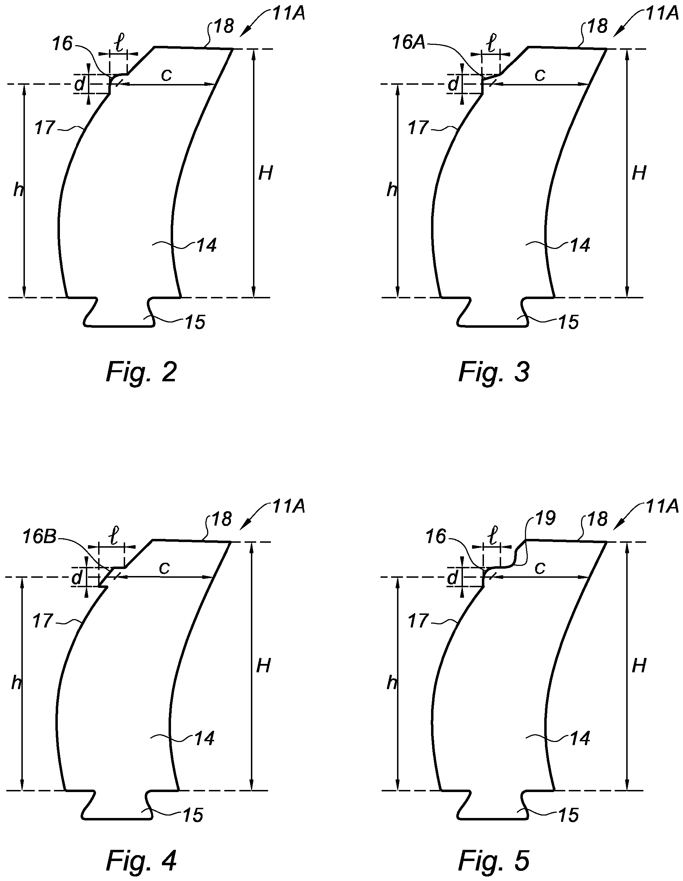

Dans la réalisation de la figure 2 conforme à l'invention, chaque pale 11A de l'hélice amont 7 comporte une unique excroissance 16 formée sur le bord d'attaque 17 de ladite pale 11A considérée.

En outre, l'unique excroissance 16, de forme arrondie, est avantageusement définie par les paramètres suivants :
- sa position en envergure h, qui est comprise entre 0,75H et 0,85H, avec H la hauteur de la pale amont 11a ;
- sa hauteur en envergure d, qui est comprise entre 0,05H et 0,2H ; et
- sa largeur en corde 1, qui est comprise entre c/16 et c/8, avec c la longueur de la corde locale de la pale à la position en envergure h de ladite excroissance 16.

Ainsi, l'unique excroissance permet une perturbation de la répartition de la circulation autour de la pale amont 11A, ce qui provoque deux tourbillons principaux co-rotatifs :
- un premier tourbillon naturel (ou tourbillon marginal) se formant à l'extrémité libre 18 de la pale amont 11A ;
- un second tourbillon forcé distinct (ou tourbillon principal supplémentaire) ayant lieu au voisinage de l'unique excroissance 16.

En outre, l'unique excroissance 16 entraîne également la formation de tourbillons auxiliaires contra-rotatifs (c'est-à-dire de sens contraire aux deux tourbillons marginal et supplémentaire) qui s'intercalent entre les deux tourbillons principaux co-rotatifs empêchant ainsi leur fusion.

Autrement dit, lors de la rotation de l'hélice amont 7, l'unique excroissance 16 vient perturber localement la répartition de la circulation autour de la pale amont 11 A, de manière à former deux tourbillons principaux indépendants en aval et qui le restent jusqu'à l'hélice aval 8.

Par ailleurs, on a représenté sur les figures 3 à 5 trois variantes de réalisation de l'excroissance de la pale amont 11A, conformes à l'invention.

En particulier, les excroissances 16A et 16B des figures 3 et 4 présentent une forme respectivement triangulaire et rectangulaire. Les paramètres associées h, d et 1 sont semblables à ceux de l'excroissance 16 de la figure 2.

En outre, dans une autre variante conforme à l'invention, comme le montre la figure 5, une encoche 19 pratiquée dans le bord d'attaque 17 de la pale amont 11A est associée à l'excroissance 16. L'encoche 19, qui jouxte l'excroissance 16, est agencée entre cette dernière et l'extrémité libre 18 de la pale amont 11A. En variante, on pourrait envisager que l'excroissance soit agencée entre l'encoche et l'extrémité libre de la pale amont.

## Revendications

1. Turbomachine à soufflante non carénée comportant deux hélices (7, 8) coaxiales et contrarotatives, lesdites hélices comportant une pluralité de pales (11A, 11B), **caractérisée par le fait que** les pales de l'hélice amont (11A) comportent des moyens (16, 16A, 16B) agencés à un unique emplacement pour perturber localement, lors de la rotation de l'hélice (7), la répartition de la circulation autour de la pale (11A), les moyens perturbateurs comportant une unique excroissance (16, 16A, 16B) formée sur le bord d'attaque (17) de la pale (11A), l'unique excroissance (16, 16A, 16B) étant définie par sa position en envergure h de telle façon que 0,75H<h<0,85H, H étant la hauteur de la pale (11A).

2. Turbomachine selon la revendication 1, dans laquelle l'unique excroissance (16, 16A, 16B) est définie par sa hauteur en envergure d de telle façon que 0,05H<d<0,2H, H étant la hauteur de la pale (11A).

3. Turbomachine selon l'une des revendications 1 et 2, dans laquelle l'unique excroissance (16, 16A, 16B) est définie par sa largeur en corde 1 de telle façon que c/16<1<c/8, c étant la longueur de la corde locale de la pale (11A) à la position en envergure h de ladite excroissance (16, 16A, 16B).

4. Turbomachine selon l'une des revendications 1 à 3 comprenant une encoche (19) qui est ménagée dans le bord d'attaque (17) de ladite pale (11A) et qui jouxte ladite excroissance (16).

## Patentansprüche

1. Turbomaschine mit einem nicht verkleideten Gebläse, die zwei koaxiale und entgegengesetzt rotierende Propeller (7, 8) umfasst, wobei die Propeller mehrere Schaufeln (11a, 11B) umfassen, **dadurch gekennzeichnet, dass** die Schaufeln (11A) des stromaufwärts gelegenen Propellers Mittel (16, 16A, 16B) umfassen, die an einer einzelnen Stelle angeordnet sind, um lokal während der Rotation des Propellers (7) die Verteilung der Strömung um die Schaufel (11A) zu stören, wobei die Störmittel eine einzelne Ausstülpung (16, 16A, 16B) umfassen, die an der Angriffskante (17) der Schaufel (11A) ausgebildet ist, wobei die einzelne Ausstülpung (16, 16A, 16B) durch ihre Umfangsposition h derart definiert ist, dass 0,75H < h < 0,85H ist, wobei H die Höhe der Schaufel (11A) ist.

2. Turbomaschine nach Anspruch 1, in der die einmalige Ausstülpung (16, 16A, 16B) durch Ihre Umfangshöhe derart definiert ist, dass 0,05H < d < 0,2H ist, wobei H die Höhe der Schaufel (11A) ist.

3. Strömungsmaschine nach einem der Ansprüche 1 und 2, wobei die einzelne Ausstülpung (16, 16A, 16B) durch ihre Sehnenlänge I derart definiert ist, dass c/16 < I < c/8 ist, wobei c die lokale Sehnenlänge der Schaufel (11A) bei der Umfangsposition h der Ausstülpung (16, 16A, 16B) ist.

4. Strömungsmaschine nach einem der Ansprüche 1 bis 3, die eine Kerbe (19) umfasst, die in der Angriffskante (17) der Schaufel (11A) ausgebildet ist und die an der Ausstülpung (16) angrenzt.

## Claims

1. A turbomachine with unducted fan, comprising two coaxial and contra-rotating propellers (7, 8), said propellers comprising a plurality of blades (11A, 11B), **characterized in that** the blades of the upstream propeller (11A) comprise means (16, 16A, 16B) arranged, at a single location, so as to locally disturb, as the propeller (7) rotates, the distribution of the flow around the blade (11A), said means comprise a single protuberance (16, 16 A, 16B) which is formed on the leading edge (17) of the blade (11A), the single protuberance being defined by its span position h such that 0.75 H < h < 0.85 H, H being the height of the blade (11A).

2. The turbomachine as claimed in claim 1, in which the single protuberance (16, 16 A, 16B) is defined by its span height d such that 0.05 H < d < 0.2 H, H being the height of the blade (11A).

3. The turbomachine as claimed in one of claims 1 and 2, in which the single protuberance (16, 16A, 16B) is defined by its chord width 1 such that c/16 < 1 < c/8, c being the length of the local chord of the blade at the span position h of said protuberance (16, 16A, 16B).

4. The turbomachine as claimed in one of claims 1 to 3, comprising a notch (19) which is formed in the leading edge (17) of said blade (11A) and which is adjacent to said protuberance (16).
